Europäisches Patentamt

European Patent Office

Office européen des brevets

(11) Publication number: **0 298 503**
**A2**

# (12) EUROPEAN PATENT APPLICATION

(21) Application number: **88110952.4**

(22) Date of filing: **08.07.88**

(51) Int. Cl.⁴ **B01J 20/04 , B01D 15/08 , G01N 30/48**

(30) Priority: **08.07.87 JP 170715/87**

(43) Date of publication of application:
**11.01.89 Bulletin 89/02**

(84) Designated Contracting States:
**DE FR GB SE**

(71) Applicant: **ASAHI KOGAKU KOGYO KABUSHIKI KAISHA**
**36-9, Maeno-cho 2-Chome Itabashi-ku Tokyo 174(JP)**

(72) Inventor: **Ichitsuka, Takeshi Asahi Kogaku Kogyo K.K.**
**36-9, Maeno-cho 2-chome**
**Itabashi-ku Tokyo(JP)**
Inventor: **Ogawa, Tetsuro Asahi Kogaku Kogyo K.K.**
**36-9, Maeno-cho 2-chome**
**Itabashi-ku Tokyo(JP)**
Inventor: **Sumita, Masaya Asahi Kogaku Kogyo K.K.**
**36-9, Maeno-cho 2-chome**
**Itabashi-ku Tokyo(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **Packing for liquid chromatography and method of using it.**

(57) A packing for liquid chromatography comprising particles having at least one the surface thereof a fluoroapatite represented by formula (I):

$$Ca_{10}(PO_4)_6(OH)_{2-2x}F_{2x} \quad (I)$$

wherein x is a number of from bout 0.1 to 1, and a method of using it.

# PACKING FOR LIQUID CHROMATOGRAPHY AND METHOD OF USING IT

## FIELD OF THE INVENTION

This invention relates to a packing for use in liquid chromatography for separation and purification of proteins, enzymes, nucleic acids, etc.

## BACKGROUND OF INVENTION

Generally employed packings for liquid chromatography include silica gel, chemically modified silica gel, synthetic high polymer gels, naturally ocurring high polymer gels, carbon gel, and the like.

Calcium phosphate compounds generally have high solubility in acidic solution. Relatively stable among them are those having an apatite structure represented by the formula:

$$Ca_{10}(PO_4)_6A_2$$

wherein A represents a hydroxyl group, a chlorine atom, a fluorine atom, etc.

These calcium phosphate compounds, particularly synthetic hydroxyapatite (wherein A is a hydroxyl group) represented by the formula $Ca_{10}(PO_4)_6(OH)_2$, have excellent biological affinity because of their similarity to inorganic main components constituting bones and teeth of living bodies. Taking advantage of their biological affinity, they have been utilized as artificial implant materials for living bodies, such as artificial tooth roots, bone fillings, etc., and have been highly appraised. The biological affinity of hydroxyapatite is ascribed to the close relations to biological high polymeric substances such as proteins and sugars.

By using this characteristic, hydroxyapatite has conventionally been utilized as a packing for chromatography. The hydroxyapatite packing shows both cation exchanging ability and anion exchanging ability to proteins, etc., while exhibiting high ability in separation of glycosides in the normal phase mode using acetonitrile and water as a eluent. Owing to such characteristics, a single column packed with hydroxyapatite can be applied to separation of a variety of substances. Further, since the desired substance can be separated under mild elution conditions, the sample under chromatography is protected from deactivation. Furthermore, the column has a high recovery. Therefore, with developments in the biological industry, hydroxyapatite has been regarded as one of the most promising packings for chromatography. That is, hydroxyapatite is the only one of the apatite compounds which has hitherto been used not only as an implant material but also as a packing for liquid chromatography, as described in Journal of Liquid Chromatography, vol. 9(16), pages 3543 to 3557 (1986).

However, the hydroxyapatite packing is poor in resistance to dissolution in acidic solutions, sometimes failing to fulfil its function. That is, when an acidic mobile phase is passed through the column packed with hydroxyapatite for a long period of time, crystals of hydroxyapatite are dissolved out and fine crystals released from the surface of packing particles and obstruct the passage of the mobile phase, eventually becoming useless. Therefore, the conventional hydroxyapatite packing is not suitable for separation operation in an acidic region. Particularly at a pH of 5.5 or less, such packing cannot be used continuously, and the range of substances to which it is applicable is naturally limited.

With respect to hydroxyapatite containing fluorine, the foloride uptake by hydroxyapatite has been reported, as described in Colloids and Surfaces, vol. 13, pages 137 to 144 (1985). However, its application such as chromatography has not yet been established.

## SUMMARY OF THE INVENTION

An object of this invention is to provide a packing for liquid chromatography which exhibits high performance for separating a wide range of substances and excellent resistance to dissolution, and maintains its functions stably for a long period of time.

EP 0 298 503 A2

Other objects and effects of this invention will be apparent from the following description.

In order to provide a packing for liquid chromatography excellent in dissolution resistance including acid resistance and maintaining the high separation performance of hydroxyapatite, the present inventors have investigated the use of fluoroapatite (one of the compounds having the apatite structure) to the packing and accomplished the present invention.

The present invention relates to a packing for liquid chromatography comprising particles having at least on the surface thereof a fluoroapatite represented by formula (I):

$$Ca_{10}(PO_4)_6(OH)_{2-2x}F_{2x} \qquad (I)$$

wherein x represents a number of from about 0.1 to 1, preferably from about 0.4 to 1, and more preferably about 1.

BRIEF DESCRIPTION OF DRAWINGS

Figures 1 and 2 each is a scanning electron micrograph showing the particulate structure of the packing obtained in Example 1 of the present invention.

Figure 3 is an X-ray diffraction pattern of the packing obtained in Example 1 of the present invention.

Figures 4(a) and 4(b) each is an infrared absorption spectrum of the packing obtained in Example 1 of the present invention or a hydroxyapatite packing, respectively.

Figure 5(a) is a chromatogram obtained by using the packing obtained in Example of the present invention, and Figure 5(b) is a chromatogram obtained by using a hydroxyapatite packing.

DETAILED DESCRIPTION OF THE INVENTION

Fluoroapatite which constitutes at least the surface of the packing particles of the present invention includes not only pure fluoroapatite wherein the hydroxyl groups are completely substituted by a fluorine atom (fluorination degree x is 1) but also partially fluorinated hydroxyapatite wherein only a part of the hydroxyl groups is substituted with a fluorine atom to a fluorination degree of at least about 0.1. If the fluorination degree is less than about 0.1, sufficient improvement on acid resistance cannot be reached.

The inside structure of the individual packing particles according to the present invention is not particularly restricted as long as the surface thereof comprises fluoroapatite represented by formula (I). Examples of the embodiment of the invention include (1) a packing comprising fluoroapatite of formula (I) throughout the individual particles, (2) a packing comprising hydroxyapatite particles of which surface is fluorinated to have the formula (I), and (3) a packing comprising inert carrier particles coated with fluoroapatite of formula (I).

In the above embodiment (1), the whole of the individual particles is formed of the fluoroapatite of formula (I) and preferably has a porosity of from 0 to about 50% and a specific surface area of from about 0.01 to 20 m²/g. The porosity can be controlled by changing the calcinating temperature or the density of the particle forming material.

In the above embodiments (2) and (3), the thickness of the fluoroapatite suface layer is preferably about 1 μm or more. The porosity and the specific surface area of the packing are preferably from 0 to about 50% and from about 0.01 to 20 m²/g, respectively.

The embodiment (1) can be prepared by the method described, e.g., in Colloids and Surfaces, vol. 13, pages 137 to 144 (1985). The embodiment (2) can be prepared by reacting a hydroxyapatite packing with a solution containing fluoride ions, and then calcinating the same. The embodiment (3) can be prepared by coating fluoroapatite on a carrier, e.g., by sputtering, ion-plating and thermal-spraying.

The packing comprising fluoroapatite throughout the particle according to the first embodiment can be obtained by known processes for producing fluoroapatite such as the method as described in Napper, D.H., Synthe, B.H.: "The dissolution kinetics of hydroxyapatite in the presence of kink poisons", J. Dent. Res., vol. 45, pages 1775 to 1783 (1966). Whether no $CaF_2$ has been formed can be confirmed by calcining the resulting fluoroapatite at an appropriate temperature and subjecting it to X-ray diffractometry. Formation of fluoroapatite can be confirmed by the shift of the (300) peak to a higher angle side by the method described, e.g., in Moreno, E.C., Kresak, M. Zahradnik, R.T.: "Physicochemical aspects of fluoride-apatite

3

systems relevant to the study of dental caries". Caries Res., vol. 11 (Suppl. 1), pages 142 to 171 (1977).

The packing comprising hydroxyapatite particles of which surface is fluorinated according to the second embodiment can be prepared, for example, by treating the surface of hydroxyapatite particles with hydrogen fluoride under a controlled pH condition.

The packing comprising inert carrier particles (e.g., alumina) coated with fluoroapatite according to the third embodiment can be prepared, for example, by sputtering.

The packing particles for liquid chromatography of the present invention are not particularly limited in size, shape, porosity, etc. However, performances such as separating ability can be assured by following a general particle design for packings for liquid chromatography. For example, the packing preferably has an average particle diameter of from about 2 to 100 $\mu$m, more particularly from about 10 to 100 $\mu$m for industrial use and from about 2 to 10 $\mu$m for use in analyses. If the average particle size is less than about 2 $\mu$m, the pressure loss on passing a liquid sample through a column packed with the packing becomes too large. If it exceeds about 100 $\mu$m, the surface area of the packing per unit volume is too small to assure separating ability. The packing preferably has a shape near to a spherical form in order to obtain stable separation characteristics while preventing cracks or cutouts although those having a macadamized form may be used. The porosity is preferably high in view of the load of the samples, but non-porous packing may be used for the analytical use. The specific surface area is preferably from about 0.01 to 20 $m^2$/g although depending on the form of the packing particles.

The packing of the present invention can be used for a method for liquid chromatography by (a) packing a column with the packing of the present invention, (b) contacting the packing with a sample comprising at least one solute, and (c) contacting the packing with a liquid mobile phase to separate the solute by elution.

Upon carrying out the method for liquid chromatography, the preferred eluents are as follows: In an ion exchanging mode, (1) a sodium phosphate buffer (pH 5 to 9), (2) a potassium phosphate buffer, (3) a mixture of a sodium chloride solution and various buffers (e.g., tris buffer, pipes buffer, etc.) and (4) a mixture of a potassium chloride solution and various buffers (e.g., tris buffer, pipes buffer. etc.). In the cases of (1) and (2), a gradient elution at a concentration of from 1-10 to 400 mM is preferred, and in the cases of (3) and (4), a gradient elution at a concentration of from 10-100 mM to 1 M is preferred. In a normal mode, an isocratactic elution with the acetonitrile/water ratio of from about 7/3 to 9/1, and a gradient elution while increasing the water concentration are preferred.

The packing for liquid chromatography according to the present invention can be suitably applied to separation of solutes such as proteins (e.g., monoclonal antibody and fibronectin), enzymes (e.g., ligase and protease), nucleic acids (e.g., nucleotide, oligonucleotide, DNA and RNA), glycosides (ginsenoside, steviside, rebaudioside and saponin), and so on and exhibits stable separation performance even in an acidic solution, e.g., phosphoric acid, hydrochloric acid, etc.

The present invention is now illustrated in greater detail with reference to the following Example and Comparative Example, but the present invention is not to be construed as being limited thereto.

Unless otherwise indicated, all parts, percents, ratios and the like are by weight.

### EXAMPLE 1 AND COMPARATIVE EXAMPLE 1

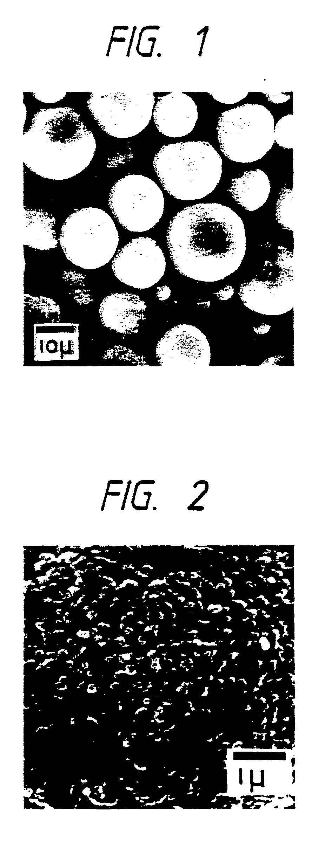

Fluoroapatite was synthesized by a conventional wet process as described in Colloid and Surfaces, vol. 13, pages 137 to 144 (1985). The resulting slurry was spray-dried by means of a spray drier ("Mobile Minor Model" manufactured by Ashizawaniro Co., Ltd.) to obtain packing particles having an average particle diameter of 10 $\mu$m. Fig. 1 is a scanning electron micrograph (1,000 X magnification) showing the shape of the resulting packing particles. Fig. 2 is a scanning electron micrograph (10,000 X magnification) showing the surface of the packing particles.

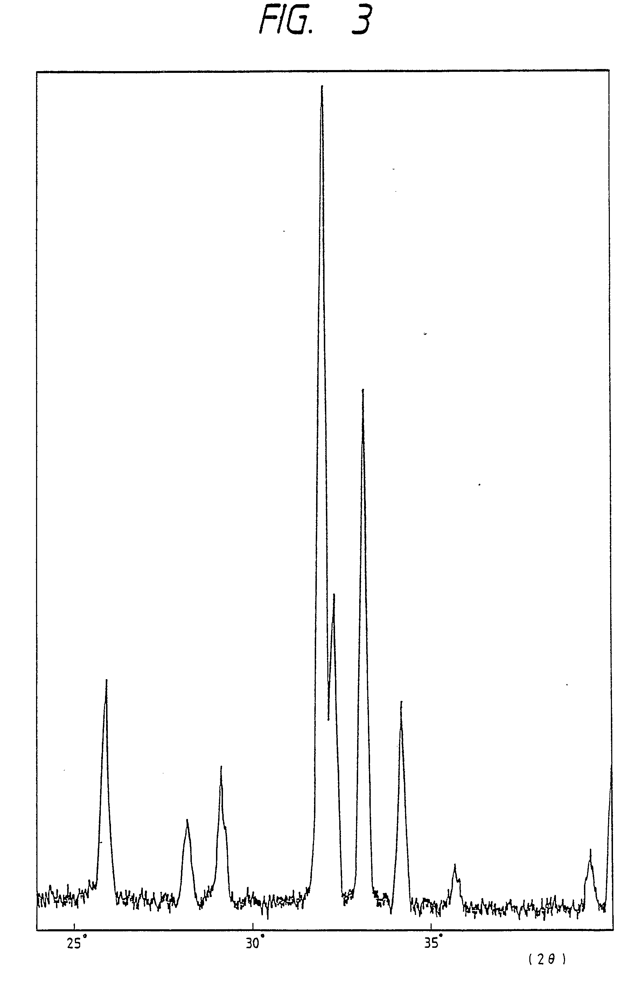

A part of the packing was calcined at 1,100°C and subjected to X-ray diffractometry. The results obtained are shown in Table 1 below and Fig. 3. As is shown in the X-ray diffraction pattern of Fig. 3, it was confirmed that no $CaF_2$ had been formed. Further, the d value at the (300) peak was compared with the corresponding ASTM measured value as shown in Table 1 to confirm the fluorination degree.

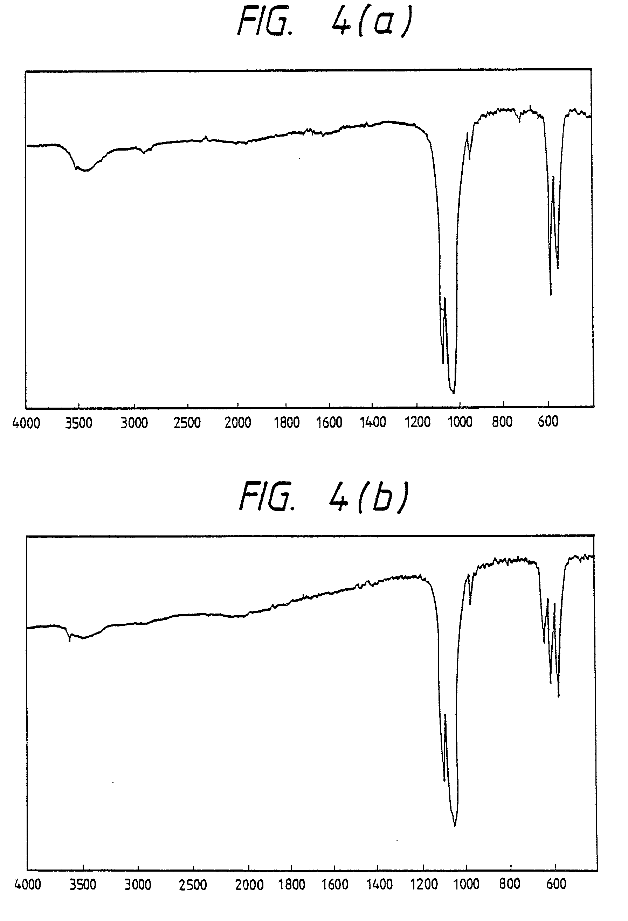

Furthermore, the packing was analyzed by infrared absorption, and the results obtained are shown in Fig. 4(a). On comparison with the infrared absorption spectrum or hydroxyapatite as shown in Fig. 4(b), it was seen that the packing had no absorption due to the hydroxyl group in the vicinity of 660 $cm^{-1}$. In

addition, chemical analysis of the packing revealed that the packing had a fluorine uptake of 3.8%, which means stoichiometrical formation of fluoroapatite.

From all these considerations, the produced fluoroapatite can be estimated to have a fluorination degree of 1.

TABLE 1

| | X-Ray Diffraction Pattern | | | | |
|---|---|---|---|---|---|
| | (211) | (112) | (300) | a-Axis ($\mathring{A}$) | c-Axis ($\mathring{A}$) |
| Found Value: | | | | | |
| Example 1 | 2.800 | 2.773 | 2.703 | 9.363 | 6.887 |
| Comparative Example 1 | 2.816 | 2.780 | 2.720 | 9.426 | 6.904 |
| ASTM Value: | | | | | |
| Fluoroapatite | 2.80 | 2.776 | 2.706 | 9.3684 | 6.8841 |
| Hydroxylapatite | 2.82 | 2.784 | 2.726 | 9.418 | 6.884 |

0.5 g of the resulting fluoroapatite particles was immersed in 100 ml of an acetic acid buffer solution at a pH of 4.0 or 5.0 for 1 or 40 hours, respectively. The supernatant liquor was then filtered through a quantitative filter paper to prepare a sample solution. The sample solution was appropriately diluted and subjected to atomic-absorption spectroscopy to determine a Ca concentration.

For comparison, hydroxyapatite packing particles (Comparative Example 1) obtained by a conventional synthesizing method followed by spray-drying in the same manner as described above were immersed in an acetic acid buffer solution to prepare a sample solution in the same manner as described above. The resulting sample solution was appropriately diluted and subjected to atomic-absorption spectroscopy to determine its Ca concentration. The results obtained are shown in Table 2 below.

TABLE 2

| Acid Resistance Test | | |
|---|---|---|
| | Ca Concentration (ppm) | |
| | pH = 4.0, 1 Hr. | pH = 5.0, 40 Hrs. |
| Example 1 | 205 | 68 |
| Comparative Example 1 | 805 | 383 |

As is apparent from Table 2, the amount of calcium dissolved out of the fluoroapatite of Example 1 is decreased to 1/4 in the case of short-term immersion and 1/5 in the case of long-term immersion as compared with that of hydroxyapatite of Comparative Example 1, indicating superiority of fluoroapatite in acid resistance.

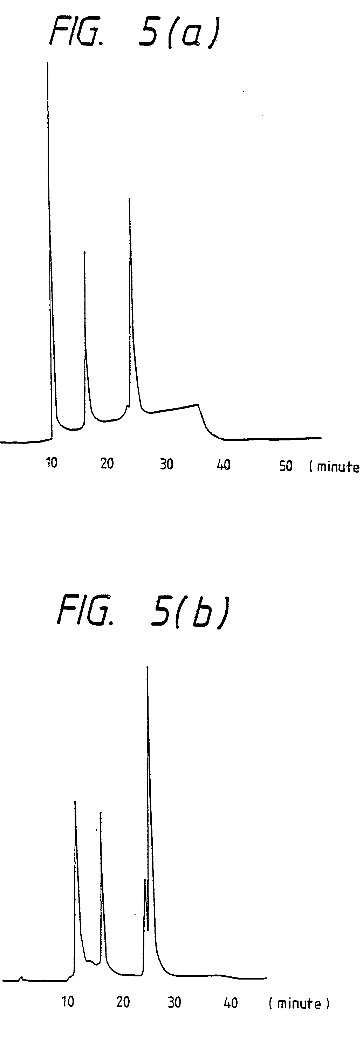

Then, each of the packings of Example 1 and Comparative Example 1 was filled by a wet process in a stainless steel column having a diameter of 7.5 mm and a height of 100 mm, and the packed column was set in a liquid chromatograph ("LC-6A" manufactured by Shimazu Seikakusho Co., Ltd.). A sample solution containing a phosphoric acid buffer solution (pH = 6.8) having dissolved therein 10 $\mu$g/$\mu$l of bovine serum albumin (produced by Seikagaku Kogyo Co., Ltd.), 1.25 $\mu$g/$\mu$l of lysozyme (produced by Seikagaku Kogyo Co., Ltd.; prepared from egg white by repeating crystallization 6 times), and 5 $\mu$g/$\mu$l of cytochrome C (prepared from horse heart; manufactured by Shiguma Co., Ltd.) was passed through the column at a flow rate of 1.0 ml/min to obtain a chromatogram. The results obtained are shown in Figs. 5(a) and (b). As is apparent from Figs. 5(a) and 5(b), the fluoroapatite of Example 1 (Fig. 5(a)) proved capable of obtaining a separation pattern similar to that of hydroxyapatite of Comparative Example 1 (Fig. 5(b)).

As described above, since the packing for liquid chromatography in accordance with the present

5

invention comprises fluoroapatite in at least its surface, it was excellent in resistance to dissolution and exhibits high and stable performance in separation of a broad range of substances. Therefore, the packing of the present invention can be used advantageously for separation and purification of proteins, enzmes, nucleic acid, and the like.

While the invention has been described in detail and with reference to specific embodiments thereof, it will be apparent to one skilled in the art that various changes and modifications can be made therein without departing from the spirit and scope thereof.

## Claims

1. A packing for liquid chromatography comprising particles having at least on the surface thereof a fluoroapatite represented by formula (I):

$$Ca_{10}(PO_4)_6(OH)_{2-2x}F_{2x} \qquad (I)$$

wherein x is a number of from about 0.1 to 1.

2. A packing for liquid chromatography as claimed in claim 1, wherein x is about 1.

3. A packing for liquid chromatography as claimed in claim 1, wherein said particles comprise said fluoroapatite represented by formula (I) throughout the particle structure.

4. A packing for liquid chromatography as claimed in claim 1, wherein said particles comprise hydroxyapatite particles having a surface layer comprising said fluoroapatite represented by formula (I).

5. A packing for liquid chromatography as claimed in claim 1, wherein said particles comprise inert carrier particles having a surface layer comprising said fluoroapatite represented by formula (I).

6. A packing for liquid chromatography as claimed in claim 1, wherein said particles have an average particle diameter of from about 2 to 100 $\mu$m.

7. A packing for liquid chromatography as claimed in claim 6, wherein said particles have an average particle diameter of from about 2 to 10 $\mu$m.

8. A packing for liquid chromatography as claimed in claim 6, wherein said particles have an average particle diameter of from about 10 to 100 $\mu$m.

9 A packing for liquid chromatography as claimed in claim 6, wherein said particles have a shape that is approximately spherical.

10. A method for liquid chromatography comprising the steps of:

(a) packing a column with a packing comprising particles having at least on the surface thereof a fluoroapatite represented by formula (I):

$$Ca_{10}(PO_4)_6(OH)_{2-2x}F_{2x} \qquad (I)$$

wherein x is a number from about 0.1 to 1;

(b) contacting said packing with a sample comprising at least one solute; and

(c) contacting said packing with a liquid mobile phase to separate said at least one solute by elution.

11. The method as claimed in claim 10, wherein said solute is selected from as protein, an enzyme, a nucleic acid and a glycoside.

12. The method as claimed in claim 10, wherein x is about 1.

## FIG. 1

10μ

## FIG. 2

1μ

# FIG. 3

25°        30°        35°

( 2θ )

## FIG. 4 (a)

4000  3500  3000  2500  2000  1800  1600  1400  1200  1000  800  600

## FIG. 4 (b)

4000  3500  3000  2500  2000  1800  1600  1400  1200  1000  800  600

# FIG. 5(a)

10    20    30    40    50    ( minute )

# FIG. 5(b)

10    20    30    40    ( minute )